# EUROPÄISCHE PATENTSCHRIFT

(11) **EP 0 796 720 B1**
(45) Veröffentlichungstag und Bekanntmachung des Hinweises auf die Patenterteilung: **20.02.2002**
(21) Anmeldenummer: 97104864.0
(22) Anmeldetag: 21.03.1997
(51) Int. Cl.: B29C 65/20

(54) **Verfahren zur Herstellung von Rahmen**
Process for making frames
Procédé pour la fabrication de cadres

(30) Priorität: 22.03.1996 DE 29605394 U
(43) Veröffentlichungstag der Anmeldung: 24.09.1997
(73) Patentinhaber: Urban GmbH & Co. Maschinenbau KG, D-87700 Memmingen (DE)
(72) Erfinder: TESCH, Wolfgang, D-87751 Heimertingen (DE); KREISSL, Reinhard, D-87758 Kronburg (DE)
(74) Vertreter: Pfister, Helmut, Dipl.-Ing.

(56) Entgegenhaltungen:
- DE-A- 2 109 362
- DE-A- 2 110 540
- DE-A- 2 805 985
- DE-A- 2 851 647
- DE-A- 3 203 025
- DE-A- 4 138 501

## Beschreibung

Die Erfindung betrifft ein Verfahren zum Herstellen von Rahmen, insbesondere von Fensterrahmen mit einer Armierung, aus auf Gehrung geschnittenen Kunststoffprofilen mit einer Schweißmaschine, bestehend aus einem Gestell mit mindestens sechs Schweißköpfen zum Verschweißen der einzelnen Rahmenteile.

Kunststoffprofile nehmen oftmals Armierungsstäbe auf, um insbesondere großen Fenstern eine ausreichende Stabilität zu geben. Die Kunststoffprofile weisen hierzu längsverlaufende Kanäle auf, die einen Armierungsstab aufnehmen können. Die Armierungsstäbe werden günstigerweise ebenfalls auf Gehrung geschnitten und liegen somit bündig unverrückbar in den Profilen. Es kann aber nun das Problem bestehen, daß ein eingeschweißter Längsholm oder Kämpfer derart mit dem Profil verschweißt wird, daß der Längskanal, der für die Aufnahme des Armierungsstabes dient, verletzt wird. Das bedeutet, daß während des Schweißens die Armierungsstäbe nicht eingeschoben sein dürften, da eine Verschweißung nicht möglich ist oder aber der Schweißspiegel bei eingeführten Armierungsstab Schaden nehmen kann.

Es ist Aufgabe der Erfindung, ein Verfahren zum Herstellen von Rahmen, insbesondere von Fensterrahmen mit einer Armierung zu entwickeln, das diesem Nachteil entgegenwirkt.

Die Aufgabe zur Herstellung eines solchen Rahmens, also mit eingeschweißten Kämpfer und Armierungsstäben in den Profilen, die an den Kämpfer anstehen, wird dadurch gelöst, daß zunächst ein Teilrahmen, insbesondere ein A-förmiger Teilrahmen erstellt wird. Ein A-förmiger oder besser H-förmiger mit einem weiteren oben oder unten angeordneten Querholm, läßt an den beiden Längsholmen eine Querschnittfläche offen, durch die ein Armierungsstab nach dem Verschweißen des Holmes eingeschoben wird. Ist die Armierung dann eingebracht, wird der Rahmen durch das Anschweißen der oder des fehlenden Profils komplettiert.

Bei der Anschweißbewegung des letzten Profiles wird hierbei oftmals eine andere Anpreßrichtung verwendet. Zuerst wurde der H- oder A-förmige Teilrahmen erstellt, in dem die beiden parallelen Längsholme gegen den als Kämpfer wirkenden Querholm bzw. den anderen abschließenden Querholm gedrückt wurden. Bei der Komplettierung des Rahmens wird nun der Teilrahmen festgehalten und das fehlende Profil mit einer Kraftkompenente, welche rechtwinklig zu der eingangs beschriebenen Bewegung steht, gegen den Teilrahmen geführt. Hierbei kann an den jeweiligen Schweißköpfen die Anpreßrichtung entsprechend variiert werden.

Durch die Verwendung einer Armierungseinschiebevorrichtung ist es möglich, daß der Armierungsstab automatisch in den Kanal des Profiles eingeführt wird. Hierbei wird die Armierungsstabeinschiebevorrichtung zum Beispiel von der Steuerung der Schweißmaschine entsprechend geführt und die Armierungsstabeinschiebevorrichtung bedient sich an einem entsprechenden Armierungsstablager oder dergleichen.

Die Armierungsstabeinschiebevorrichtung weist hierbei eine entsprechende Ausgestaltung auf, so daß bei dem Einschieben des Armierungsstabes in dem Kanal vorstehende Widerstände, wie zum Beispiel Schweißwulste oder eingeschweißte Profilelemente und dergleichen durchdrungen werden. Hierbei ist es günstig, daß die frisch verschweißte Profile noch warm sind und das Profilmaterial leicht durchdrungen werden kann. Die notwendige Kraft für das Einführen des Armierungsstabes wird hierbei von Arbeitszylindern (hydraulich, pneumatisch) erbracht.

Wie beschrieben sind Halterungen für die Profile vorgesehen, die wirksam sind wenn der Rahmen zusammengesetzt und geschweißt wird. Das gleiche gilt auch bei der Erstellung des Teilrahmens. Die Halterungen sind wie beschrieben derart ausgestaltet, daß sie ein Profil gegen andere Profile oder gegen Teilrahmen pressen können. Es ist aber auch vorgesehen, daß ein Profil, welches noch nicht mit dem Teilrahmen verschweißt ist, derart zur Seite bewegt wird (nach oben, nach unten oder nach rechts oder nach links von der unverschweißten Gehrungsfläche), damit durch den so freigegebene Profilkanal der Armierungsstab eingeschoben werden kann. Nachdem der Armierungsstab eingeschoben ist, wird das Profil mit den Halterungen wieder in die Schweißposition zurückgefahren und mit dem Teilrahmen verschweißt.

Ein Vorteil dieses Verfahrens liegt nun darin, daß ein Ablegen des Teilrahmens, also ein Lösen der Halterungen nicht notwendig ist, um den Rahmen zu komplettieren. Bei den bekannten Vorrichtungen mußte der Rahmen umgesetzt werden, was aufgrund des nicht fertigen Rahmens und der hohen Belastung aufgrund der eingeschobenen Armierungsstäbe dazu führte, daß sich der Rahmen auf den parallel zu den Längsholmen verlaufenden Streben am Kämpfer aufstellte und so die Bearbeitung behinderte.

Der Rahmen wird festgehalten und entsprechend komplettiert, ohne daß ein Umspannen notwendig ist, wodurch die Gefahr einer Betriebsbehinderung zuverlässig unterbunden wird.

In der Zeichnung sind einige Ausführungsbeispiele der Erfindung schematisch dargestellt. Es zeigen:
- Fig. 1: eine Draufsicht einer Schweißmaschine zur Herstellung von Rahmen, insbesondere Fensterrahmen mit einer Armierung in einer Betriebsstellung zur Einschweißung eines Kämpfers, während der Eckschweißung,
- Fig. 2: eine schematische Draufsicht auf die Schweißmaschine gemäß Fig. 1 in einer anderen Betriebsstellung,
- Fig. 3 und Fig. 4: zwei Draufsichten auf ein abgewandeltes Ausführungsbeispiel der Schweißmaschine in verschiedenen Betriebsstellungen,
- Fig. 5: eine Draufsicht auf ein weiteres Ausführungsbeispiel der Schweißmaschine und
- Fig. 6: eine weitere Verwendung des Ausführungsbeispieles nach Fig. 5, ebenfalls in einer Draufsicht.

In den zeichnerischen Darstellungen sind die Schweißmaschinen nur schematisch angedeutet. Ein Gestell, auf dem die einzelnen Schweißköpfe gehalten sind, ist nicht gezeigt. Dieses Gestell kann horizontal oder aufrechtstehend vorgesehen sein. Die einzelnen Schweißköpfe sind an diesem Gestell in Richtung der einzelnen Rahmenteile des jeweiligen Fensterrahmens verschiebbar, um die einzelnen Schweißköpfe in Arbeitsstellung und außer Arbeitsstellung zu bringen. Dabei muß aber beachtet werden, daß beispielsweise auch eine seitliche Verschiebbarkeit von Schweißköpfen insbesondere diejenigen für die Kämpfereinschweißung in der Regel nicht ausreicht, um die anderen Schweißköpfe einander in hinreichender Weise zu nähern. Gerade die Schweißköpfe für die Kämpfereinschweißung bestimmen bisher die minimalsten Abmessungen, die ein Fensterrahmen mindestens aufweisen muß, ohne daß es notwendig wäre, einzelne Bauteile der Maschine aufwendig zu demontieren.

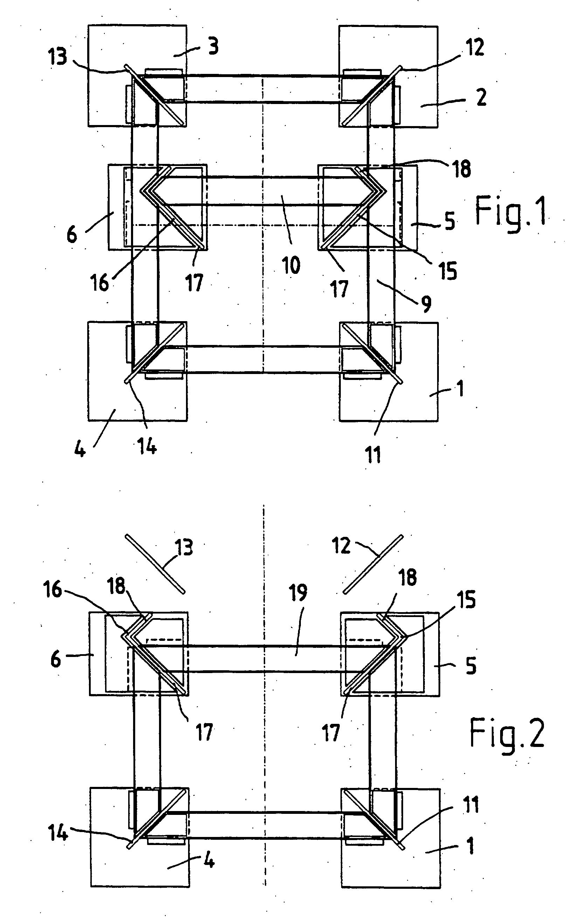

In der Darstellung der Fig. 2 sind insgesamt sechs Schweißköpfe 1 - 6 vorgesehen. Die Schweißköpfe 1 - 4 dienen dabei der Herstellung von Eckverbindungen. Die Schweißköpfe 5,6 dienen zur Einschweißung eines Kämpfers 10 in den Rahmen 9, der wie an sich bekannt, aus vier auf Gehrung geschnittenen Rahmenteilen besteht. Entsprechend den Gehrungen an den Enden der einzelnen Rahmenteile sind die Schweißspiegel 11 - 14 ausgerichtet. Die Schweißköpfe 5,6, die der Einschweißung eines Kämpfers 10 dienen, besitzen winklige Schweißspiegel 15 bzw. 16 und zwar jeweils mit einem langen Schenkel 17 und einem kurzen Schenkel 18.

Bei der Herstellung eines Fensterrahmens 9, wie dies in der Fig. 1 angedeutet ist, sind die größeren Abmessungen des Schenkels 17 im Vergleich zum Schenkel 18 ohne Bedeutung. Zur Einschweißung eines Kämpfers 10 genügt an sich ein verhältnismäßig kurzer Schenkel am Schweißspiegel.

Durch den relativ kurzen Schenkel 18 kann der Abstand der Schweißköpfe 5,6 von den Schweißköpfen 2,3 verhältnismäßig gering sein, demgemäß ergibt sich auch ein geringerer Abstand des Kämpfers 10 vom benachbarten parallelen Holm.

Die Fig. 2 macht deutlich, wie mittels der Schweißköpfe 1,4,5,6 auch ein Rahmen 19 geschweißt werden kann, der keinen Kämpfer besitzt. Durch die langen Schenkel 17 an den Schweißspiegeln 15,16 können diese Schweißspiegel so benützt werden, wie die entsprechenden Schweißspiegel 11,14 der Schweißköpfe 1,4. Die Schweißspiegel 12,13 bzw. die zugehörigen Schweißköpfe 2,3 sind bei diesem Anwendungsbeispiel außer Betrieb.

Es ist klar, daß auf diese Weise Rahmen ohne Kämpfer mit sehr kleinen Abmessungen gefertigt werden können.

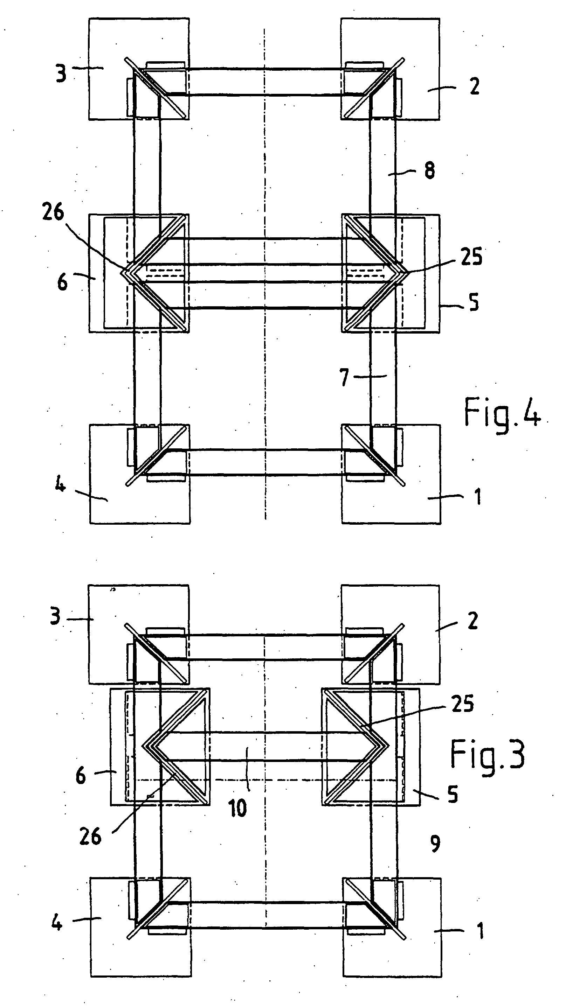

Das Ausführungsbeispiel der Fig. 3 unterscheidet sich von demjenigen nach der Fig. 1 im wesentlichen dadurch, daß die Schweißköpfe 5,6 mit gleichschenkligen Schweißspiegeln 25,26 ausgerüstet sind. Diese Bauweise kann dann mit Vorteil benützt werden, wenn, wie in Fig. 4 angedeutet, gleichzeitig zwei Fensterrahmen 7,8 gefertigt werden. Die Schweißköpfe 5,6 werden dabei zum Schweißen von zwei der Eckverbindung sowohl am Rahmen 7 als auch am Rahmen 8 verwendet.

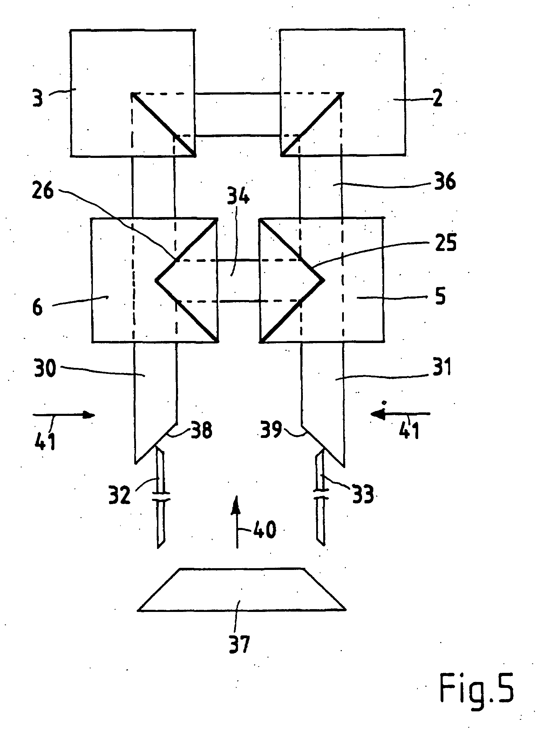

In Fig. 5 ist das Herstellungsverfahren von Rahmen mit der erfindungsgemäßen Schweißmaschine und dem erfindungsgemäßen Verfahren kurz angedeutet. In die Längsprofile 30,31 sollen die Armierungsstäbe 32,33 eingeschoben werden. Da, wie angedeutet der eingesetzte Kämpfer oder der Längsholm 34 den Einführkanal im Profil 30,31 verletzt, kann ein Einschweißen des Kämpfers 34 nur erfolgen, wenn die Armierungsstäbe 32,33 nicht eingelegt sind. Das Herstellungsverfahren sieht deswegen vor, daß zunächst ein, wie in Fig. 5 angedeuteter Teilrahmen 36 produziert wird, wobei die Eckschweißköpfe 2,3 sowie die Schweißköpfe 5,6 mit den winkligen Schweißspiegeln 25,26 zum Einsatz kommen. Ist dieser Teilrahmen 36 fertiggestellt, werden mit einer nicht weiter dargestellten Armierungsstabeinschiebevorrichtung die Armierungsstäbe 32,33 in die Profile 30,31 eingeschoben. Es ist hierbei von Vorteil, daß das letzte Profil 37 noch nicht verschweißt ist und die Gehrungsflächen 38,39 noch zugänglich sind, durch welche die Armierungsstäbe 32,33 eingeschoben werden. Nachdem die Armierungsstäbe eingeschoben sind, wird das Profil 37 durch eine Bewegung in Längsrichtung der Längsprofile 30,31 (siehe Pfeil 40) gegen den Teilrahmen 36 bewegt. Diese Kraftkomponente kann durch die nicht weiter dargestellten unteren Eckschweißköpfe 1,4 erfolgen. Die Eckschweißköpfe weisen hierzu Mittel aus, die es erlauben, die Anpreßrichtung um mindestens 90° zu drehen. Es kann bei sonstigen Anwendungen von Vorteil sein, daß zum Beispiel die Längsprofile 30,31 durch eine senkrecht zu den Längsprofilen verlaufende Kraftkomponente 41 gegeneinandergedrückt werden. Die Schweißköpfe weisen hierzu entsprechende Arbeitszylinder auf.

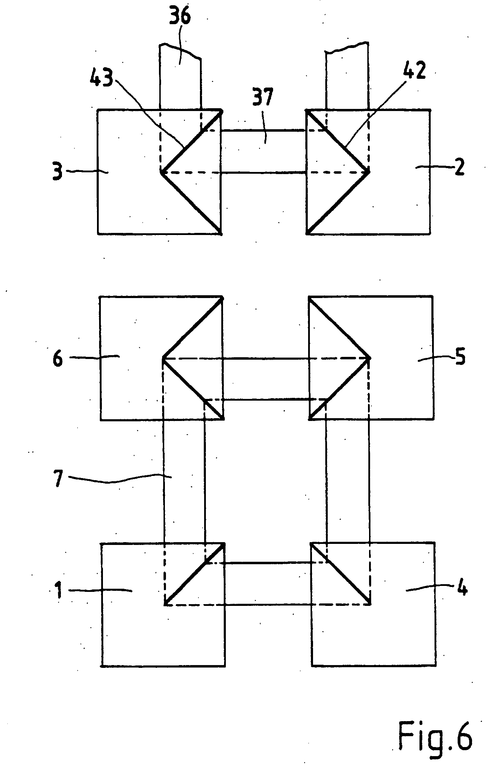

In Fig. 6 ist eine weitere Variante dargestellt. Wie in Fig. 5 angedeutet, sind eigentlich für das Komplettieren des Teilrahmens 36 nur die unteren Schweißköpfe 1,4 im Einsatz. Dies bedeutet aber, daß die Maschine zur zu einem Drittel ausgelastet ist. Der Teilrahmen 36 wird deswegen, vergleiche Fig. 5 und 6, nach oben transportiert derart, daß das Profil 37 nun von den oberen Eckschweißköpfen 2,3 verschweißt wird. Die Eckschweißköpfe 2,3 weisen hierbei ebenfalls winklige Schweißspiegel 42,43 auf, die entsprechend den Gehrungsflächen 38,39 orientierbar sind und hier zum Beispiel atypischerweise als obere Schweißköpfe die unteren Gehrungsflächen verschweißen. Dadurch werden die anderen Schweißköpfe 5,6 und 1,4 freigegeben, wobei auf diesen Schweißköpfen bereits der nächste Rahmen 7 verschweißt wird oder bei einer entsprechenden Ausgestaltung der Schweißköpfe 1,4 ebenfalls mit winkligen Schweißspiegeln ein Teilrahmen mit eingesetzten Kämpfer vorbereitet wird. Durch eine solche Ausgestaltung wird eine hohe Effizienz der Schweißmaschine erreicht.

Die Schweißköpfe 1 bis 6 können in gemeinsamen Portalen oder Trägern für gemeinsame Transaktionen teilweise zusammengefaßt sein. Die Schweißköpfe 1 bis 6 weisen mindestens eine Beweglichkeit in der Rahmenebene auf, die Schweißspiegel zusätzlich wahlweise auch rechtwinklig hierzu.

## Patentansprüche

1. Verfahren zum Herstellen von Rahmen, insbesondere Fensterrahmen mit einer Armierung, aus auf Gehrung geschnittenen Kunststoffprofilen mit einer Schweißmaschine, bestehend aus einem Gestell mit mindestens sechs Schweißköpfen zum Verschweißen der einzelnen Rahmenteile, **gekennzeichnet durch** die Abfolge folgender Schritte:
a) Erstellen eines Teilrahmens, insbesondere eines A-förmigen Teilrahmens.
b) Einführen eines Armierungsstabes in einen Längskanal des noch nicht vollständig verschweißten Profiles des Teilrahmens.
c) Komplettierung des Rahmens **durch** Anschweißen des fehlenden Profiles an den Teilrahmen.

2. Verfahren nach Anspruch 1, **dadurch gekennzeichnet, daß** der Armierungsstab von einer Armierungsstabeinschiebevorrichtung in den Kanal eingeführt wird und die Armierungsstabeinschiebevorrichtung mit der Schweißmaschine zusammenwirkt.

3. Verfahren nach Anspruch 1 oder 2, **dadurch gekennzeichnet, daß** der Armierungsstab von der Armierungsstabeinschiebevorrichtung mit solcher Kraft in den Kanal eingeführt wird die ausreicht, Widerstände im Kanal, insbesondere in den Kanal hineinreichende Schweißwulste oder Profilelemente eingeschweißter Profile zu durchdringen.

4. Verfahren nach einem oder mehreren der Ansprüche 1 bis 3, **dadurch gekennzeichnet, daß** das abschließend an dem Teilrahmen zu verschweißende Profil in einer Halterung eingelegt und von dieser gegenüber dem Teilrahmen zentriert und gehalten wird und die Halterung das Profil zur Seite bewegt, wenn der Armierungsstab in den Kanal des Profils des Teilrahmens eingeführt wird.

## Claims

1. Method for producing frames, in particular window frames with a reinforcement made of mitred plastic profiles with a welding machine, comprising a stand with at least six welding heads for welding together the individual frame parts, **characterised by** the succession of the following steps:
a) Construction of a partial frame, in particular of an A-shaped partial frame.
b) Introduction of a reinforcement rod into a longitudinal channel of the profile of the partial frame which is not yet completely welded.
c) Completion of the frame by welding on the missing profile to the partial frame.

2. Method according to claim 1, **characterised in that** the reinforcement rod is introduced into the channel by a push-in arrangement for reinforcement rods and that the push-in arrangement for reinforcement rods acts together with the welding machine.

3. Method according to claim 1 or 2, **characterised in that** the reinforcement rod is introduced into the channel by the push-in arrangement for reinforcement rods with a force, which is sufficient to penetrate obstacles in the channel in particular welding beads projecting into the channel or profile elements of welded-in profiles.

4. Method according to one or more of the claims 1 to 3, **characterised in that** the profile which has finally to be welded to the partial frame is inserted into a holding device and is centred and fixed by the holding device opposite the partial frame and that the holding device moves the profile sideward when the reinforcement rod is introduced into the channel of the profile of the partial frame.

## Revendications

1. Procédé de fabrication de cadres, spécialement conçu pour la fabrication de cadres de fenêtre avec armature, à partir de profilés coupés à 45° en utilisant une machine à souder comportant une structure avec au moins 6 têtes de soudure adaptées aux pièces du cadre, **caractérisé par** la séquence de fabrication suivante :
a) fabrication d'un cadre partiel, de préférence en forme de A
b) introduction d'une tige d'armature à l'intérieur d'un des profilés du cadre en cours de fabrication, non encore soudé aux deux extrémités
c) finalisation de la fabrication du cadre en soudant le profilé manquant au reste du cadre

2. Procédé selon la revendication 1 **caractérisé en ce que** la tige d'armature est introduite à l'intérieur du profilé par une machine spéciale couplée à la machine à souder.

3. Procédé selon la revendication 1 ou 2, **caractérisé en ce que** la tige d'armature est introduite à l'intérieur du profilé par la machine spécifique avec une force suffisante pour percer des obstacles situés à l'intérieur du profilé, par exemple des bords de soudures entre les éléments du cadre.

4. Procédé selon l'une ou plusieurs des revendications 1 à 3 **caractérisé en ce que** la dernière pièce à souder complétant le cadre est placée sur un support, qui maintient, centre la pièce par rapport au reste du cadre partiellement réalisé et la déplace au moment de l'introduction de la tige d'armature à l'intérieur du profilé du cadre déjà partiellement réalisé.
